# EUROPÄISCHE PATENTSCHRIFT

(11) **EP 0 679 666 B1**
(45) Veröffentlichungstag und Bekanntmachung des Hinweises auf die Patenterteilung: **03.02.1999**
(21) Anmeldenummer: 95105550.8
(22) Anmeldetag: 12.04.1995
(51) Int. Cl.: C08F 259/08

(54) **Peroxidisch vernetzbare, keine Cure-Site-Monomere enthaltende Fluorkautschuke**
Fluoro-elastomers deprived of cure-site monomers and curable by peroxides
Elastomères fluorés ne comprenant pas de monomères réticulants, et réticulables par péroxydes

(30) Priorität: 25.04.1994 DE 4414334
(43) Veröffentlichungstag der Anmeldung: 02.11.1995
(73) Patentinhaber: BAYER AG, 51368 Leverkusen (DE)
(72) Erfinder: Krüger, Ralf, Dr., D-51061 Köln (DE); Harrison, David, Dr., D-51061 Köln (DE); Wrobel, Dieter, Dr., D-51375 Leverkusen (DE)

(56) Entgegenhaltungen:
- EP-A- 0 547 771
- EP-A- 0 581 114
- DE-A- 2 132 463

## Beschreibung

Die vorliegende Erfindung betrifft peroxidisch vernetzbare Fluorkautschuke, die zusätzlich zu den die Polymerkette bildenden Fluormonomeren keine Cure-Site-Einheiten enthalten sowie ein Verfahren zu ihrer Herstellung.

Fluorpolymere werden in der Technik immer dann eingesetzt, wenn besondere Eigenschaften, wie niedrige Oberflächenspannung oder hohe Chemikalienbeständigkeit verlangt werden. Für die Verwendung auf dem Fluorelastomergebiet müssen die Fluorkautschuke nach der Formgebung vernetzt werden.

Diese Vernetzung benötigt im Falle der bekannten, nicht modifizierten Fluorkautschuke auf der Basis von Vinylidenfluorid und Hexafluorpropen und weiteren Fluormonomeren, sofern keine besonderen Reaktivstellen eingeführt werden, drastische Bedingungen, wodurch Schädigungen des Fluorpolymers auftreten können. Die diesbezüglich am meisten gebräuchlichen Vulkanisationstypen sind die bisaminische bzw. bisphenolische Vulkanisation (Ullmann's Encyclopedia of Industrial Chemistry, 5. Auflage, 1993, Vol. A 23, Chapter 2.6, S. 265-269).

Zur Vermeidung drastischer Reaktionsbedingungen für die Vernetzung werden Reaktivstellen, sogenannte Cure-Sites, in die Polymerkette eingeführt, an denen mittels eines Vernetzungskatalysators und gegebenenfalls eines Covernetzers mit hoher Selektivität Vernetzungspunkte geschaffen werden können, ohne daß dabei der übrige Teil des Polymerrückgrats angegriffen werden muß. Nach dem Stand der Technik werden solche Cure-Site-Einheiten im Polymerisationsschritt eingeführt, indem man ein reaktivgruppenhaltiges Monomer, z.B. Bromtrifluorethylen, mit den die Polymerkette bildenden Fluormonomeren copolymerisiert und/oder in Gegenwart einer gesättigten Iod oder Brom und Iod enthaltenden Verbindung, die als Kettenübertragungsmittel wirkt, die genannten Fluormonomere polymerisiert. Ausgenommen von dem Begriff Cure-Site Monomer sind jedoch die, die Polymerkette bildenden Monomere.

Solche peroxidisch vernetzten Fluorelastomere zeigen im Vergleich zu beispielsweise mit Bisphenolen vernetzten Typen eine wesentlich verbesserte Resistenz gegenüber Basen, Nucleophilen und oxidativem Angriff. Ein wesentlicher Nachteil dieser Fluorelastomere ist jedoch, daß zusätzliche Verbindungen für die Polymerisation vorhanden sein müssen, die in das Fluorpolymer eingebaut werden. Diese Verbindungen sind in der Regel teuer, ebenso wie das komplizierte Polymerisationsverfahren. Zudem entstehen während der Vulkanisation von Brom/Iod-haltigen Copolymeren flüchtige toxische Spaltprodukte, wie z.B. Methylbromid.

Fluorkautschuke auf der Basis von Tetrafluorethylen und Propylen sind zwar peroxidisch auch ohne besondere Cure-Site-Einheiten vulkanisierbar, sie weisen jedoch wesentliche Nachteile, wie zu hohe Glasübergangstemperatur und, bedingt durch den hohen Nichtfluormonomeranteil, schlechte Quelleigenschaften in aprotischen Lösungsmitteln auf. Die peroxidische Vulkanisation, eingeleitet durch H-Abstraktion an den eingebauten Propensequenzen, erfordert allerdings größere Peroxidmengen (D.E. Hull, Kautsch. Gummi Kunstst. 38 (1985) 480-484). Durch Terpolymerisation von Tetrafluorethylen mit Propen und Vinylidenfluorid können Polymersequenzen geschaffen werden, die nachträglich in einem separaten Schritt durch HF-Abspaltung modifizierbar sind und eine effizientere Vulkanisation ermöglichen (US 4 758 618).

Nach dem bekannten Stand der Technik müssen peroxidisch vernetzbare Fluorkautschuke mit Fluorgehalten > 60 Gew.-% Cure-Site-Einheiten enthalten, die entweder während der Polymerisation oder in einem separaten nachgeschalteten Schritt in die Polymerkette eingeführt werden.

EP-A-547 771 beschreibt vernetzbare Fluorkautschuke, die über 60% Fluorid enthalten und die entweder bisphenolisch vernetzt werden oder peroxidisch, wenn Reaktivstellen im Fluorpolymer enthalten sind.

Aufgabe der vorliegenden Erfindung war daher die Bereitstellung peroxidisch vernetzbarer Fluorkautschuke, die zusätzlich zu den, die Polymerkette bildenden Fluormonomeren , keine Reaktivstellen, sog. Cure-Site-Einheiten ,enthalten.

Es ist bekannt, daß die Homo- und Copolymerisation fluorhaltiger Monomere durch ein Redoxsystem, bestehend aus einer Manganverbindung und einem Reduktionsmittel gestartet werden kann. Dieses Redoxstartersystem wird für die Herstellung fluorierter thermoplastischer Copolymere des Tetrafluorethylens eingesetzt (DE 1 720 801, DE 2 037 028, DE 4 022 405, DE 3 024 450).

Gegenstand der vorliegenden Erfindung sind peroxidisch vernetzbare Fluorkautschuke, die zusätzlich zu den, die Polymerkette bildenden Fluormonomeren keine Cure-Site-Einheiten enthalten.

In den erfindungsgemäßen Fluorkautschuken sind die, die Polymerkette bildenden Fluormonomere im wesentlichen fluorierte Ethylene, wie Vinylidenfluorid, Tetrafluorethylen und Chlortrifluorethylen, und fluorierte Vinylverbindungen, wie Hexafluorpropen, Hydropentafluorpropen, Chlorpentafluorpropen und perfluorierte Vinylether der Formel CF₂=CF-O(-CF₂-CFX-O)ₙ-R_{F}, mit n = 1-4, X = F oder CF₃ und R_{F} = C₁-C₃ - Perfluoralkyl. Daneben können auch Vinylester, z.B. Vinylacetat, in Anteilen bis zu 20 Mol-% in der Polymerkette enthalten sein.

In einer Ausführungsform der vorliegenden Erfindung sind die, die Polymerkette bildenden Fluormonomere vorzugsweise Vinylidenfluorid (CF₂=CH₂), Hexafluorpropen (CF₂=CF-CF₃) sowie gegebenenfalls Tetrafluorethylen (CF₂=CF₂) und/oder perfluorierte Vinylether der Formel CF₂=CF-O(-CF₂-CFX-O)ₙ-R_{F} , mit n = 1-4, X = F oder CF₃ und R_{F} = C₁-C₃ - Perfluoralkyl.

Die fluorierten Vinylverbindungen sind neben den fluorierten Ethylenen und gegebenenfalls nichtfluorierten Monomeren in solchen Mengen in den erfindungsgemäß einsetzbaren Fluormonomeren enthalten, daß sie die Kristallisation der Polymerkette vollständig unterdrücken und daraus amorphe kautschukartige Copolymere resultieren. Bei Vinylidenfluorid / Hexafluorpropen-Copolymeren liegt daher der bevorzugte Hexafluorpropen-Gehalt bei 30-18 Mol-%. Bei Vinylidenfluorid/ Tetrafluorethylen/Hexafluorpropen-Terpolymeren kann die Untergrenze je nach Tetrafluorethylen-Gehalt bereits bei 16 Mol-% Hexafluorpropen liegen. Typische Gehalte an erfindungsgemäß einsetzbaren perfluorierten Vinylethern liegen zwischen 5 und 20 Mol-%. Die resultierenden erfindungsgemäßen Fluorkautschuke besitzen Fluorgehalte > 60 Gew.-%.

Die Zahlenmittel der Molekulargewichte der resultierenden Fluorkautschuke liegen zwischen 8x10⁴ und 10⁶ g/Mol.

Gegenstand der vorliegenden Erfindung ist zudem ein Verfahren zur Herstellung der erfindungsgemäßen peroxidisch vernetzbaren Fluorkautschuke, wonach die Polymerisation der, die Polymerkette bildenden Fluormonomere, in wäßriger Dispersion bei Temperaturen von 5-30°C, einem Druck von 5-25 bar mit einem Initiatorsystem, bestehend aus mindestens einer Manganverbindung in Oxydationsstufen ≥ 3 sowie gegebenenfalls einem Reduktionsmittel bei pH-Werten von 2 bis 5, durchgeführt wird, wobei die Manganverbindung in einer Menge von 0,1 bis 5 Gew.-Teilen, pro 1 000 Gew.-Teile polymerisiertem Fluormonomer, eingesetzt wird.

Das in dem erfindungsgemäßen Verfahren einsetzbare Initiatorsystem besteht aus
a) mindestens einer Manganverbindung oder einem Gemisch aus mehreren Manganverbindungen in Oxidationstufen ≥ 3 und gegebenenfalls
b) einem Reduktionsmittel, wie z.B. Carbonsäuren, Dicarbonsäuren, mehrwertigen Alkoholen und Hydroxycarbonsäuren.

Erfindungsgemäß einsetzbar sind dabei Manganverbindungen in Oxidationsstufen ≥ 3, wie z.B. MnO₄⁻, MnO₄²⁻ bzw. MnO₄³⁻, wie beispielsweise Alkalimanganate, wobei als Alkalimetall Kalium bevorzugt ist. Auch einsetzbar sind als Edukte die aus der Umsetzung von Mn-Verbindungen in Oxidationsstufen zwischen 3 und 7 mit den oben aufgeführten Reduktionsmitteln entstehenden Mn-Komplexe, wie die stabilen Oxalatokomplexe der Formel [Mn(C₂O₄)ₘ]^{3-2m}, mit m = 1 bis 3. Weist der Exponent 3-2m = x der zuvor genannten Formel einen negativen Zahlenwert auf, so ist dies gleichbedeutend mit Betrag x-, ebenso wie positive x- Werte Betrag x + bedeuten.

Bei der Reduktion der Manganverbindungen, die in Oxydationsstufen > 3 vorliegen, wirken zunächst die eingesetzten Fluormonomere als Reduktionsmittel, die dabei selbst zu Verbindungen oxidiert werden, wie diese oben als Reduktionsmittel beschrieben sind. So entsteht beispielsweise Oxalsäure aus Tetrafluorethylen. Die für den eigentlichen polymerisationsauslösenden Schritt, der Reduktion von Mn(III) zu Mn(II) erforderlichen Reduktionsmittel werden also intermediär auch als Oxidationsprodukte der Fluormonomeren selbst gebildet, so daß eine Polymerisation auch in Abwesenheit eines zusätzlichen Reduktionsmittels möglich ist. Zur Erzielung besserer Raum-Zeit-Ausbeuten und zur besseren pH-Wert-Pufferung erweist sich jedoch die zusätzliche Zugabe von einem Reduktionsmittel als vorteilhaft. Die erfindungsgemäßen Reduktionsmittel können jedoch auch als Gemisch, bestehend aus mehreren Reduktionsmitteln, eingesetzt werden.

Erfindungsgemäß bevorzugt einsetzbare Reduktionsmittel sind unter CO₂-Abspaltung oxidierbare Verbindungen, wie beispielsweise Carbonsäuren, Dicarbonsäuren, Hydroxycarbonsäuren oder Polyhydroxyalkane, vorzugsweise Oxalsäure, Weinsäure (Dihdroxybernsteinsäure), Isobuttersäure, Zitronensäure, Ascorbinsäure und Glycerin.

In dem erfindungsgemäßen Verfahren werden als Reduktionsmittel vorzugsweise Carbonsäuren, Dicarbonsäuren, Polyhydroxyalkane, wie beispielsweise Glykol und Glycerin oder Hydroxycarbonsäuren, eingesetzt.

Als Initiatorsystem wird im erfindungsgemäßen Verfahren vorzugsweise entweder das Salz der Permangansäure in Kombination mit Oxalsäure/Oxalatsalz oder direkt der Oxalato-Komplex des dreiwertigen Mangans der Formel [Mn(C₂O₄)ₘ]^{3-2m}, mit m = 1 bis 3 , eingesetzt.

Zur Herstellung der erfindungsgemäßen Fluorkautschuke können die für die Copolymerisation fluorhaltiger Monomerer bekannten Verfahrensparameter herangezogen werden. Es kann kontinuierlich oder halbkontinierlich in wäßriger Dispersion in einem Autoklaven copolymerisiert werden.

Für den bevorzugten Fall des halbkontinuierlichen Verfahrens wird eine wäßrige Flotte und ein Teil der Monomeren entsprechend der Reaktivität und dem gewünschten Einbauverhältnis vorgelegt. Nach dem Start der Polymerisation wird der Autoklaveninnendruck konstant gehalten, indem man die zu Polymer umgesetzten Bestandteile des Monomergemisches entsprechend der Reaktionsgeschwindigkeit nachdrückt.

Im Hinblick auf die guten Eigenschaften der zu erzeugenden Fluorkautschuke (Copolymerisate) ist es erforderlich, eine Menge an Manganverbindungen von 0,1 bis 5 Gew.-Teilen, vorzugsweise 0,4 bis 3 Teilen, bezogen auf 1000 Gew.-Teile polymerisierter Fluormonomere, einzusetzen, was 0,033 bis 1,67 Gew.-%, vorzugsweise 0,13 bis 1 Gew.-%, bezogen auf die wäßrige Phase, entspricht. Man kann den Katalysator bzw. die Katalysatormischung in einzelnen Portionen zu Beginn der Polymerisation der Flotte zufügen oder auch die Katalysatorlösung, über den Zeitraum des Polymerisationsvorganges verteilt, kontinuierlich zudosieren, wobei die letztere Methode bevorzugt ist.

Die Menge an Reduktionsmittel beträgt 0 bis 40 Teile bezogen auf 1000 Teile polymerisierter Fluormonomere.

Im Hinblick auf die Sauberkeit des Verfahren bezüglich der Verhinderung von Braunsteinbildung und die Raum-Zeit-Ausbeute der zu erzeugenden Copolymerisate ist es beim Einsatz von Reduktionsmitteln vorteilhaft, dieses in Mengen von 1 bis 40 Teilen, vorzugsweise 2 bis 20 Teilen, bezogen auf 1000 Teile polymerisierter Fluormonomere einzusetzen. Das Reduktionsmittel wird vorzugsweise in der wäßrigen Polymerisationflotte vorgelegt.

Im weiteren Hinblick auf die Sauberkeit des Verfahrens und die Raum-Zeit-Ausbeute wird die Polymerisation im pH Bereich unter pH 6, vorzugsweise von pH 2 bis pH 5 durchgeführt. Es wird bevorzugt, ein Reduktionsmittel einzusetzt, das auch als pH Puffer wirkt. Beispielsweise werden Ammoniumoxalat und Oxalsäure eingesetzt, die sowohl als Reduktionsmittel als auch als Puffer fungieren.

Für den bevorzugten Fall der Emulsionspolymerisation werden zur Stabilisierung der Dispersion fluorhaltige Emulgatoren allein, ein Saatlatex allein, oder eine Mischung bestehend aus einem Saatlatex und fluorierten Emulgatoren eingesetzt. Bevorzugt gelangen perfluorierte Emulgatoren, wie beispielsweise wasserlösliche Salze der C₆ - C₁₂-Perfluorcarbonsäure oder -sulfonsäure zum Einsatz. Beispielhaft seien hier die Natrium- oder Ammoniumsalze der Perfluoroctansäure und das Lithiumsalz der Perfluoroctylsulfonsäure genannt. Die Emulgatoren werden in einer Konzentration von 0,05 bis 2 Gew.%, vorzugsweise 0,1 bis 0,5 Gew.% bezogen auf die wäßrige Phase eingesetzt. Man kann den Emulgator vor Beginn der Polymerisation der Flotte zugeben oder gegebenenfalls auch, über den Zeitraum des Polymerisationsvorganges verteilt, kontinuierlich zudosieren.

Verwendet man einen Saatlatex, so besteht dieser aus Fluorpolymerpartikeln mit einer mittleren Partikelgröße ≤ 60 nm, die mit einem oder mehreren der genannten Emulgatoren stabilisiert sind.

Die erfindungsgemäßen Fluorkautschuke lassen sich nach üblichen Methoden radikalisch vernetzen. Als radikalische Initiatoren dienen vorzugsweise Peroxide, die bei Temperaturen oberhalb 100°C Halbwertszeiten der Zersetzung von mindestens 5 Minuten aufweisen, wie beispielsweise Dibenzoylperoxid, t-Butylperoxybenzol, Bis-(t-butylperoxy-isopropyl)benzol, 2,5-Bis-(t-butylperoxy)-2,5-dimethylhexan oder 2,5-Bis-(t-butylperoxy)-2,5-dimethylhexin-(3).

Die Peroxide werden dabei in einer Menge von 0,5-10 Gew.-Teilen, bevorzugt 1-5 Gew.-Teilen, bezogen auf 100 Teile der erfindungsgemäßen Fluorkautschuke, zugegeben werden.

Die Zugabe von zusätzlichen Covernetzern ist, insbesondere bei der Druckhärtung, möglich, um bessere Vulkanisations- und mechanische Eigenschaften zu erhalten. Als Covernetzer kann eine Vielzahl von Verbindungen mit mehreren Doppelbindungen dienen, wie z.B. Triallylcyanurat, Triallylisocyanurat, Tri(meth)allylisocyanurat, Tetramethyltetra-vinylcyclotetrasiloxan, Triallylphosphit und N,N'-m-Phenylenbismaleinimid, die in Mengen von 0,1-15, bevorzugt 0,5-10 Gew.-Teilen, bezogen auf 100 Teile der erfindungsgemäße Fluorkautschuke enthalten.

Weiterhin enthält die vulkanisierbare Mischung als Säureakzeptor dienende Oxide oder Hydroxide von Metallen, wie beispielsweise Magnesium, Calcium, Blei, Zink und Barium oder mindestens ein basisches Salz mit einem organischen Säurerest, wie Natriumstearat, Magnesiumoxalat oder Carbonate oder basisches Bleiphosphat oder einer Kombination daraus in Anteilen von nicht mehr als 15 Gew.-Teilen, bezogen auf 100 Teile des erfindungsgemäßen Fluorkautschuks.

Die Zugabe von weiteren bekannten Füllstoffen, Verstärkungsmitteln, Weichmachern, Schmierstoffen, Verarbeitungshilfsstoffen, Pigmenten oder ähnlichem ist möglich.

Eine Einarbeitung der vorgenannten Mischungsbestandteile in die erfindungsgemäße Kautschukmischung geschieht nach den bekannten Methoden der Mischungsbildung, z.B. in einem Walzwerk oder einem Innenkneter.

Die Vulkanisation erfolgt in der Regel bei 120 bis 200 °C in einer ersten Stufe unter Druck in einer dem Erhalt der Dimensionsstabilität dienenden Form und wird dann zur Einstellung der Endeigenschaften im Umluftofen nachvulkanisiert.

Alle im Text genannten Angaben in Teilen entsprechen Gew.-Teilen.

### Ausführungsbeispiele

### Herstellung des Saatlatex 1

In einem 61-Autoklaven wurden 3,7 kg entionisiertes Wasser vorgelegt, und darin 54g Natriumperfluorcaprylat gelöst. Dann wurde der geschlossene Autoklav dreimal jeweils mit einem Stickstoffdruck von 10bar beaufschlagt und anschließend auf Normaldruck entspannt. In den Autoklaven wurden 510g Hexafluorpropen und 280g Vinylidenfluorid gegeben und das Reaktionsgemisch unter Rühren auf 75°C erwärmt. Nach Erreichen dieser Temperatur betrug der Autoklaveninnendruck 38,6 bar. Die Polymerisation wurde durch Zugabe von 50ml einer wäßrigen Ammoniumperoxidisulfatlösung (90g/l) gestartet. Während der Polymerisation wurde ein Monomergemisch aus 60 Gew.% Vinylidenfluorid und 40 Gew.% Hexafluorpropen so nachgedrückt, daß der Autoklaveninnendruck konstant gehalten wurde. Innerhalb einer Gesamtlaufzeit von 13 Minuten wurden auf diese Weise insgesamt 330g Vinylidenfluorid und 220g Hexafluorpropen zugepumpt. Zur Beendigung der Polymerisation wurde das nicht umgesetzte Gasgemisch abgelüftet und der Autoklaveninhalt abgekühlt. Es wurden 4,45 kg einer koagulatfreien wäßrigen Emulsion mit einem Feststoffgehalt von 15,8 % erhalten.

### Herstellung des Saatlatex 2

In Analogie zur Vorschrift für die Herstellung des Saatlatex 1 wurde in einem 36 1-Autoklaven 21,85 kg einer koagulatfreien wäßrigen Emulsion mit einem Feststoffgehalt von 13,6 % hergestellt, indem mit einer wäßrigen Vorlage gestartet wurde, die 0,53 Gew.-% Lithiumperfluoroctylsulfonat anstelle der perfluorierten Carbonsäure und zusätzlich 0,1 Gew.-% Lithiumcarbonat enthielt.

### Beispiel 1

In einem 6-1-Autoklaven wurden 3700 g entionisiertes Wasser und 300 g des Saatlatex 1 vorgelegt. Darin wurden 30 g Ammoniumoxalat Monohydrat gelöst und die gesamte Flotte auf pH 3 mit Salzsäure eingestellt. Der geschlossene Autoklav wurde viermal jeweils mit einem Stickstoffdruck von 10 bar beaufschlagt und anschließend auf Normaldruck entspannt. In den Autoklaven wurden 90 g Vinylidenfluorid und 120 g Hexafluorpropen gegeben und das Reaktionsgemisch unter Rühren auf 25°C erwärmt. Nach Erreichen dieser Temperatur betrug der Autoklaveninnendruck 12,4 bar. Die Polymerisation wurde eingeleitet durch die kontinuierliche Zugabe von 100 ml pro Stunde einer wäßrigen Lösung, die 10g/l Kaliumpermanganat enthielt. Die Permanganatkonzentration betrug 0,16 Gew.-%, bezogen auf die wäßrige Phase ( 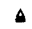 3,19 g/kg polymerisiertes Fluormonomer). Während der Polymerisation wurde ein Monomergemisch aus 60 Gew.% Vinylidenfluorid und 40 Gew.% Hexafluorpropen so nachgedrückt, daß der Autoklaveninnendruck konstant auf 12,4 bar gehalten wurde. Innerhalb einer Gesamtlaufzeit von 6,5 Stunden wurden auf diese Weise insgesamt 900g Vinylidenfluorid und 600g Hexafluorpropen zugepumpt. Zur Beendigung der Polymerisation wurde das nicht umgesetzte Gasgemisch abgelüftet und der Autoklaveninhalt abgekühlt. Es wurden 5900 g einer koagulatfreien wäßrigen Emulsion mit einem Feststoffgehalt von 25,2 % erhalten.

Die Emulsion wurde zum Koagulieren des Produktes in eine 4%-ige wäßrige Magnesiumsulfatlösung gegossen. Das Produkt wurde mit Wasser gewaschen und dann getrocknet, wobei man 1464 g eines kautschukartigen Copolymeren erhielt. Anhand der ¹⁹F-NMR-Analysen wurde folgende Copolymerzusammensetzung bestimmt: 22,7 Mol-% Hexafluorpropen, 77,3 Mol-% Vinylidenfluorid.

Das Copolymer ist in THF vollständig löslich. Die Mooney-Viskosität des Produktes, ML₁₊₁₀ (100°C) beträgt 129 Einheiten.

Zur Vulkanisation des Produktes wurde eine Abmischung bestehend aus 100 Gew.-Teilen des Produktes aus Beispiel 1, 3 Gew.-Teile Calciumhydroxid, 4 Gew.-Teile Perkalink® 301/50 (Triallylisocyanurat, 50 %ig in inaktiven Füllstoffen) und 3 Gew.-Teilen Luperco® 130 X (2,5-Dimethyl-2,5-bis(tertiärbutyl)-hexan; 45 %ig in inaktiven Füllstoffen) hergestellt. Das Vulkanisationsverhalten wurde mit einer Vulkameter Maschine MDR2000E der Firma Monsanto bei 170°C untersucht. Zur Untersuchung der mechanischen Eigenschaften des vulkanisierten Produktes wurden aus den genannten vulkanisierfähigen Mischungen unter Druck bei 170°C Formkörper (1x10x10 mm Platten) hergestellt und für 30 Minuten vulkanisiert sowie anschließend in einem Umluftofen nachvulkanisiert (1 h bei 160°C, 1 h bei 170°C, 2 h bei 180°C und 20 h bei 200 °C). Die Ergebnisse, im folgenden gekennzeichnet als MDR-Ergebnisse, (s'ₘᵢₙ bzw. s'ₘₐₓ = Drehmomente im Minimum bzw. Maximum) und mechanischen Eigenschaften sind in Tabelle 1 eingetragen.

### Beispiel 2

In einem 195-1-Autoklaven wurden 119 kg entionisiertes Wasser, 9,75 kg des Saatlatex 2 und 1,3 kg einer 31%-igen Lösung von Lithiumperfluoroctylsulfonat vorgelegt. Darin wurden 200 g Oxalsäure.Dihydrat gelöst und die gesamte Flotte auf pH 3 mit Lithiumhydroxid eingestellt. Der geschlossene Autoklav wurde viermal mit Stickstoff beaufschlagt und anschließend auf Normaldruck entspannt. In den Autoklaven wurden 1,94 kg Vinylidenfluorid und 2,37 kg Hexafluorpropen gegeben und das Reaktionsgemisch unter Rühren auf 25°C erwärmt. Nach Erreichen dieser Temperatur betrug der Autoklaveninnendruck 13,3 bar. Die Polymerisation wurde durch die kontinuierliche Zugabe einer wäßrigen Lösung, die 10g/l Kaliumpermanganat enthielt, eingeleitet. Die Permanganatkonzentration betrug 0,021 Gew.-%, bezogen auf die wäßrige Phase ( 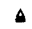 1,69 g / kg polymerisiertes Fluormonomer). Während der Polymerisation wurde ein Monomergemisch aus 60 Gew.% Vinylidenfluorid und 40 Gew.% Hexafluorpropen so nachgedrückt, daß der Autoklaveninnendruck konstant auf 13,3 bar gehalten wurde. Innerhalb einer Gesamtlaufzeit von 6,5 Stunden wurden auf diese Weise insgesamt 20,2 kg Vinylidenfluorid, 13,54 kg Hexafluorpropen und 2,76 kg Kaliumpermanganat-Lösung zugepumpt. Zur Beendigung der Polymerisation wurde das nicht umgesetzte Gasgemisch abgelüftet und der Autoklaveninhalt abgekühlt. Es wurden 168,1 kg einer koagulatfreien wäßrigen Emulsion mit einem Feststoffgehalt von 22 % erhalten.

Ein Teil der Emulsion wurde wie im Beispiel 1 koaguliert.
Copolymerzusammensetzung: 20,9 Mol-% Hexafluorpropen, 79,1 Mol-% Vinylidenfluorid.

Das Copolymer ist in THF vollständig löslich. Die Mooney-Viskosität des Produktes, ML₁₊₁₀ (100°C) beträgt 96 Einheiten.

Zur Vulkanisation des Produktes wurde eine Abmischung wie im Beispiel 1 hergestellt und untersucht. Die Eigenschaften sind in Tabelle 1 eingetragen.

### Beispiel 3

In einem 12-1-Autoklaven wurden 8 kg entionisiertes Wasser und 12 g Perfluoroctansäure vorgelegt. Darin wurden 25 g Oxalsäure.Dihydrat gelöst und die gesamte Flotte auf pH 3 mit Ammoniumhydroxid eingestellt. Der geschlossene Autoklav wurde viermal jeweils mit einem Stickstoffdruck von 10 bar beaufschlagt und anschließend auf Normaldruck entspannt. In den Autoklaven wurden 180 g Vinylidenfluorid und 220 g Hexafluorpropen gegeben und das Reaktionsgemisch unter Rühren auf 25°C erwärmt. Nach Erreichen dieser Temperatur betrug der Autoklaveninnendruck 12,1 bar. Die Polymerisation wurde eingeleitet durch die kontinuierliche Zugabe von 100 ml pro Stunde einer wäßrigen Lösung, die 10g/l Kaliumpermanganat enthielt. Die Permanganatkonzentration betrug 0,035 Gew.-%, bezogen auf die wäßrige Phase ( 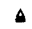 0,81 g/kg polymerisiertes Fluormonomer). Während der Polymerisation wurde ein Monomergemisch aus 60 Gew.% Vinylidenfluorid und 40 Gew.% Hexafluorpropen so nachgedrückt, daß der Autoklaveninnendruck konstant auf 12,1 bar gehalten wurde. Innerhalb einer Gesamtlaufzeit von 2,8 Stunden wurden auf diese Weise insgesamt 1,5 kg Vinylidenfluorid und 1,0 kg Hexafluorpropen zugepumpt. Zur Beendigung der Polymerisation wurde das nicht umgesetzte Gasgemisch abgelüftet und der Autoklaveninhalt abgekühlt. Es wurden 11,12 kg einer koagulatfreien wäßrigen Emulsion mit einem Feststoffgehalt von 24,1 % erhalten.

Die Emulsion wurde wie im Beispiel 1 koaguliert.
Copolymerzusammensetzung: 21,9 Mol-% Hexafluorpropen, 78,1 Mol-% Vinylidenfluorid.

Das Copolymer ist in THF vollständig löslich. Die Mooney-Viskosität des Produktes, ML₁₊₁₀ (100°C) beträgt 111 Einheiten.

### Beispiel 4

In einem 12-1-Autoklaven wurden 8 kg entionisiertes Wasser und 50 g einer 31%-igen Lösung von Lithiumperfluoroctylsulfonat vorgelegt. Darin wurden 9 g Oxalsäure.Dihydrat gelöst und die gesamte Flotte auf pH 3 mit Lithiumhydroxid eingestellt. Der geschlossene Autoklav wurde viermal jeweils mit einem Stickstoffdruck von 10 bar beaufschlagt und anschließend auf Normaldruck entspannt. In den Autoklaven wurden 180 g Vinylidenfluorid und 240 g Hexafluorpropen eingetragen und das Reaktionsgemisch unter Rühren auf 25°C erwärmt. Nach Erreichen dieser Temperatur betrug der Autoklaveninnendruck 14,0 bar. Die Polymerisation wurde durch die kontinuierliche Zugabe von 100 ml pro Stunde einer wäßrigen Lösung, die 5g/l Kaliumpermanganat enthielt, eingeleitet. Die Permanganatkonzentration betrug 0,021 Gew.-%, bezogen auf die wäßrige Phase ( 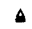 0,42 g/kg polymerisiertes Fluormonomer). Während der Polymerisation wurde ein Monomergemisch aus 60 Gew.% Vinylidenfluorid und 40 Gew.% Hexafluorpropen so nachgedrückt, daß der Autoklaveninnendruck konstant auf 14 bar gehalten wurde. Innerhalb einer Gesamtlaufzeit von 4 Stunden wurden auf diese Weise insgesamt 1,5 kg Vinylidenfluorid und 1,0 kg Hexafluorpropen zugepumpt. Zur Beendigung der Polymerisation wurde das nicht umgesetzte Gasgemisch abgelüftet und der Autoklaveninhalt abgekühlt. Es wurden 11,06 kg einer koagulatfreien wäßrigen Emulsion mit einem Feststoffgehalt von 23,7 % erhalten.

Die Emulsion wurde wie im Beispiel 1 koaguliert.
Copolymerzusammensetzung: 21,1 Mol-% Hexafluorpropen, 78,9 Mol-% Vinylidenfluorid.

Das Copolymer ist in THF vollständig löslich. Die Mooney-Viskosität des Produktes, ML₁₊₁₀ (100°C) beträgt 102 Einheiten.

### Beispiel 5

In einem 195-1-Autoklaven wurden 130 kg entionisiertes Wasser und 1,3 kg einer 31%-igen Lösung von Lithiumperfluoroctylsulfonat vorgelegt. Darin wurden 200 g Oxalsäure Dihydrat gelöst und die gesamte Flotte auf pH 3 mit Lithiumhydroxid eingestellt. Der geschlossene Autoklav wurde viermal mit Stickstoff beaufschlagt und anschließend auf Normaldruck entspannt. In den Autoklaven wurden 1,7 kg Vinylidenfluorid, 2,05 kg Hexafluorpropen und 0,38 kg Tetrafluorethylen gegeben und das Reaktionsgemisch unter Rühren auf 25°C erwärmt. Nach Erreichen dieser Temperatur betrug der Autoklaveninnendruck 13,3 bar. Die Polymerisation wurde durch die kontinuierliche Zugabe einer wäßrigen Lösung, die 10g/l Kaliumpermanganat enthielt, eingeleitet. Die Permanganatkonzentration betrug 0,016 Gew.-%, bezogen auf die wäßrige Phase ( 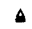 0,51 g/kg polymerisiertes Fluormonomer). Während der Polymerisation wurde ein Monomergemisch aus 54,25 Gew.% Vinylidenfluorid, 36,25 Gew.% Hexafluorpropen und 9,5 Gew.% Tetrafluorethylen so nachgedrückt, daß der Autoklaveninnendruck konstant auf 13,3 bar gehalten wurde. Innerhalb einer Gesamtlaufzeit von 2,1 Stunden wurden auf diese Weise insgesamt 21,7 kg Vinylidenfluorid, 14,5 kg Hexafluorpropen, 3,8 kg Tetrafluorethylen und 2,1 kg Kaliumpermanganat - Lösung zugepumpt. Zur Beendigung der Polymerisation wurde das nicht umgesetzte Gasgemisch abgelüftet und der Autoklaveninhalt abgekühlt. Es wurden 176,3 kg einer koagulatfreien wäßrigen Emulsion mit einem Feststoffgehalt von 24 % erhalten.

Die Emulsion wurde wie im Beispiel 1 koaguliert.
Copolymerzusammensetzung: 16,7 Mol-% Hexafluorpropen, 73,6 Mol-% Vinylidenfluorid, 9,7 Mol-% Tetrafluorethylen.

### Vergleichsbeispiel 1

Der nach Beispiel 1 hergestellte Rohkautschuk wurde wie im Beispiel 1 aber ohne Peroxidzugabe (Luperco® 130 XL) abgemischt und vulkanisiert. Die in Tabelle 1 eingetragenen Ergebnisse zeigen, daß die Vulkanisationsmischung in Abwesenheit von Peroxid nicht vernetzbar ist.

### Vergleichsbeispiel 2

In einem 6 1-Autoklaven wurden 2400 ml entionisiertes Wasser vorgelegt. Darin wurde 100g Saatlatex 1, 7 g Natriumperfluorcaprylat und 15 g Kaliumperoxidisulfat gelöst. Dann wurde der geschlossene Autoklav dreimal jeweils mit einem Stickstoffdruck von 10 bar beaufschlagt und anschließend auf Normaldruck entspannt. In den Autoklaven wurden 750 g Hexafluopropen und 480 g Vinylidenfluorid gegeben und das Reaktionsgemisch unter Rühren auf 50°C erwärmt. Nach Erreichen dieser Temperatur betrug der Autoklaveninnendruck 27,3 bar. Die Polymerisation wurde eingeleitet durch die kontinuierliche Zugabe von 15 ml pro Stunde einer wässrigen Lösung, die Triethanolamin (75g/l) enthielt. Zusätzlich wurde 19 ml/h Methylacetat in den Autoklav zugedrückt. Während der Polymerisation wurde ein Monomergemisch aus 60 Gew.% Vinylidenfluorid und 40 Gew.% Hexafluorpropen so nachgedrückt, daß der Autoklaveninnendruck konstant gehalten wurde. Innerhalb einer Gesamtlaufzeit von 2 Stunden wurden auf diese Weise insgesamt 300 g Vinylidenfluorid und 200 g Hexafluorpropen zugepumpt. Zur Beendigung der Polymerisation wurde das nicht umgesetzte Gasgemisch abgelüftet und der Autoklaveninhalt abgekühlt. Es wurden 3,17 kg einer koagulatfreien wäßrigen Emulsion mit einem Feststoffgehalt von 19,9 % erhalten.

Die Emulsion wurde wie im Beispiel 1 koaguliert.
Copolymerzusammensetzung: 25 Mol-% Hexafluorpropen, 75 Mol-% Vinylidenfluorid.

Das Copolymer ist in THF vollständig löslich. Die Mooney-Viskosität des Produktes, ML₁₊₁₀ (100°C) beträgt 124 Einheiten.

Zur Vulkanisation des Produktes wurde eine Abmischung wie im Beispiel 1 hergestellt und untersucht. Die Eigenschaften sind in Tabelle 1 eingetragen.

### Vergleichsbeispiel 3

Analog Beispiel 1 wurde eine Vulkanisationsmischung mit einem handelsüblichen Vinylidenfluorid/Hexafluorpropen-Copolymeren der Fa. Montefluos (Handelsname: Tecnoflon, Zusammensetzung: 21,8 Mol-% Hexafluorpropen, 78,2 Mol-% Vinylidenfluorid, ML₁₊₁₀ (100°C): 80) hergestellt und untersucht.

Die Ergebnisse der MDR-Messungen für die Vergleichsversuche 2 und 3 zeigen, daß Vinylidenfluorid/Hexafluorpropen-Copolymere, die keine speziellen Cure-Site-Einheiten enthalten und mit anderen Initiatorsystemen hergestellt wurden, auf radikalischem Wege mittels Peroxiden nicht vernetzbar sind. Die daraus hergestellten Formkörper fließen, daher wurden keine weiteren mechanischen Eigenschaften im Zugversuch bestimmt.

### Vergleichsbeispiel 4

In einem 6 1-Autoklaven wurden 4 kg entionisiertes Wasser und 50 g Perfluoroctansäure vorgelegt. Darin wurden 16 g Ammoniumoxalat-Dihydrat gelöst und die gesamte Flotte mit Salzsäure auf pH 3 eingestellt. Der geschlossene Autoklav wurde viermal jeweils mit einem Stickstoffdruck von 10 bar beaufschlagt und anschließend auf Normaldruck entspannt. In den Autoklaven wurden 100 g Vinylidenfluorid und 200 g Hexafluorpropen gegeben und das Reaktionsgemisch unter Rühren auf 20°C erwärmt. Nach Erreichen dieser Temperatur betrug der Autoklaveninnendruck 9,5 bar. Um die Reaktion einzuleiten, wurden 100 ml einer 0,4 Gew.-%igen wäßrigen Kaliumpermanganatlösung in den Autoklaven eingedrückt. Nach Zugabe der Permanganatlösung betrug der Druck im Autoklaven 9,7 bar; die Permanganatkonzentration in der wäßrigen Flotte 0,0095 Gew.-%.

Nach zwei Stunden betrug der Druck im Autoklaven immer noch 9,7 bar. Das nicht umgesetzte Gasgemisch wurde abgelüftet und der Autoklaveninhalt abgekühlt. Es wurden 4,25 kg einer klaren Lösung mit einem Feststoffgehalt von 0,38 Gew.-% erhalten. Es hatte sich kein Polymer gebildet.

### Vulkanisationsergebnisse:

**Tabelle 1**

| Beispiel | ML₁₊₁₀ (100°C) | MDR s' min / dNm | MDR s' max / dNm | Zugfestigkeit/MPa | Bruchdehnung/% |
|---|---|---|---|---|---|
| 1 | 129 | 6,7 | 15,9 | 19,8 | 342 |
| 2 | 96 | 8,3 | 19,6 | 17,4 | 250 |
| 3 | 111 | 7,2 | 18,8 | 21,8 | 374 |
| 4 | 102 | 7,0 | 17,9 | 20,2 | 369 |
| 5 | 79* | 9,6 | 22,4 | 22,6 | 286 |
| Vergleichsbeispiel 1 | 129 | 6,2 | 7,9 | - | - |
| Vergleichsbeispiel 2 | 124 | 1,26 | 5,79 | - | - |
| Vergleichsbeispiel 3 | 80 | 1,03 | 4,48 | - | - |

| | | | | | |
|---|---|---|---|---|---|
| * bei 120°C gemessen | | | | | |

## Patentansprüche

1. Verfahren zur Herstellung von peroxidisch vernetzbaren Fluorkautschuken mit Fluorgehalten >60 % durch Polymerisation von Vinylidenfluorid (CF₂=CH₂), Hexafluorpropen (CF₂=CF-CF₃) sowie gegebenenfalls Tetrafluorethylen (CF₂=CF₂) und/oder perfluorierte Vinylether der Formel CF₂=CF-O(-CF₂-CFX-O)ₙ-RF , mit n = 1-4, X = F oder CF₃ und RF = C₁-C₃-Perfluoralkyl, in wäßriger Dispersion bei Temperaturen von 5-30°C, einem Druck von 5-25 bar mit einem Initiatorsystem, bestehend aus mindestens einer Manganverbindung in Oxydationsstufen ≥ 3 sowie gegebenenfalls einem Reduktionsmittel, bei pH-Werten von 2-5, wobei die Manganverbindung in einer Menge von 0,1 bis 5 Gew.-Teilen, pro 1 000 Gew.-Teile polymerisiertem Fluormonomer eingesetzt wird.

2. Verfahren nach Anspruch 3, dadurch gekennzeichnet, daß als Reduktionsmittel Carbonsäuren, Dicarbonsäuren, Polyhydroxyalkan oder Hydroxycarbonsäuren eingesetzt werden.

3. Verfahren nach einem oder mehreren der Ansprüche 3 bis 4, wobei als Initiatorsystem entweder ein Permanganatsalz in Kombination mit Oxalsäure/Oxalatsalz oder direkt der Oxalato-komplex des dreiwertigen Mangans der Formel [Mn(C₂O₄)ₘ]^{3-2m}, mit m = 1 bis 3, eingesetzt wird.

4. Peroxidisch vernetzbare Fluorkautschuke, die zusätzlich zu den die Polymerkette bildenden Fluormonomeren keine Cure-Site-Einheiten enthalten, erhältlich nach einem Verfahren nach einem oder mehreren der Ansprüche 1 bis 3.

## Claims

1. Process for the production of peroxide curable fluororubbers having fluorine contents of >60% by polymerisation of vinylidene fluoride (CF₂=CH₂), hexafluoropropene (CF₂=CF-CF₃) optionally together with tetrafluoroethylene (CF₂=CF₂) and/or perfluorinated vinyl ethers of the formula CF₂=CF-O(-CF₂-CFX-O)ₙ-R_{F}, where n = 1-4, X = F or CF₃ and R_{F} = C₁-C₃ perfluoroalkyl, in an aqueous dispersion at temperatures of 5-30°C, a pressure of 5-25 bar with an initiator system consisting of at least one manganese compound in an oxidation state of ≥ 3, optionally together with a reducing agent at pH values of 2-5, wherein the manganese compound is used in a quantity of 0.1 to 5 parts by weight per 1000 parts of polymerised fluoromonomer.

2. Process according to claim 1, characterised in that carboxylic acids, dicarboxylic acids, polyhydroxyalkane or hydroxycarboxylic acids are used as the reducing agent.

3. Process according to one or more of claims 1 to 2, wherein the initiator system used is either a permanganate salt in combination with oxalic acid/oxalate salt or directly the oxalato complex of trivalent manganese of the formula [Mn(C₂O₄)ₘ]^{3-2m}, where m = 1 to 3.

4. Peroxide curable fluororubbers which contain no cure-site units in addition to the fluoromonomers forming the polymer chain, obtainable using a process according to one or more of claims 1 to 3.

## Revendications

1. Procédé pour la préparation de caoutchoucs fluorés réticulables par des peroxydes avec des teneurs en fluor >60% par polymérisation de fluorure de vinylidène (CF₂ = CH₂), d'hexafluoropropène (CF₂ = CF-CF₃) ainsi qu'éventuellement de tétrafluoroéthylène (CF₂ = CF₂) et/ou de vinyléthers perfluorés de la formule CF₂ = CF-O(-CF₂-CFX-O)ₙ-RF avec n = 1-4, X = F ou CF₃ et RF = perfluoroalkyle en C₁-C₃, dans une dispersion aqueuse à des températures de 5-30°C, une pression de 5-25 bar avec un système d'initiateur constitué au moins d'un composé du manganèse à l'état d'oxydation ≥ 3 ainsi qu'éventuellement d'un agent réducteur, à des valeurs de pH de 2-5, le composé du manganèse étant utilisé dans une quantité de 0,1 à 5 parties en poids pour 1 000 parties en poids de monomère fluoré polymérisé.

2. Procédé selon la revendication 1, caractérisé en ce que l'on utilise comme agent réducteur des acides carboxyliques, des acides dicarboxyliques, des polyhydroxyalcanes ou des acides hydroxycarboxyliques.

3. Procédé selon l'une ou plusieurs quelconques des revendications 1 à 2, un sel de permanganate en combinaison avec de l'acide oxalique/sel d'oxalate ou directement le complexe oxalato du manganèse trivalent de la formule [Mn(C₂O₄)ₘ]^{3-2m}, avec m = 1 à 3, étant utilisé comme système d'initiateur.

4. Caoutchoucs fluorés réticulables par des peroxydes, qui ne contiennent pas d'unités Cure-Site en plus des monomères fluorés formant la chaîne polymère, obtenus selon un procédé selon l'une ou plusieurs quelconques des revendications 1 à 3.
